# EUROPÄISCHE PATENTSCHRIFT

(11) **EP 0 301 536 B1**
(45) Veröffentlichungstag und Bekanntmachung des Hinweises auf die Patenterteilung: **10.09.1997**
(21) Anmeldenummer: 88112214.7
(22) Anmeldetag: 28.07.1988
(51) Int. Cl.: C22C 5/04, E01B 5/00, C01B 5/00, G21C 19/317

(54) **Palladiumlegierung als Katalysator zur Oxidation von Wasserstoff in Wasserstoff und Sauerstoff enthaltender Atmosphäre**
Palladium alloy as a catalyst for hydrogen oxidation in an atmosphere containing hydrogen and oxygen
Alliage de palladium comme catalyseur pour l'oxydation de l'hydrogène dans une atmosphère contenant de l'hydrogène et de l'oxygène

(30) Priorität: 30.07.1987 DE 3725290
(43) Veröffentlichungstag der Anmeldung: 01.02.1989
(73) Patentinhaber: FORSCHUNGSZENTRUM JÜLICH GMBH, 52425 Jülich (DE); Gesellschaft für Reaktorsicherheit (GRS) mbH, 50667 Köln (DE)
(72) Erfinder: Klatt, Karl-Heinz, D-5170 Jülich (DE); Konrad, Ralf, D-6349 Sinn (DE); Wenzl, Helmut, Prof. Dr., D-5170 Jülich (DE); Chakraborty, Amiya K., Dr., D-5042 Erftstadt (DE); Rohde, Jürgen, D-5060 Bergisch-Gladbach (DE); Kersting, Edmund, D-5063 Overath (DE)

(56) Entgegenhaltungen:
- DE-A- 2 633 113
- DE-B- 1 533 234
- FR-A- 2 139 081
- FR-A- 2 369 351
- GB-A- 1 123 585
- US-A- 2 847 284
- US-A- 3 740 313
- CHEMICAL ABSTRACTS, vol. 71, no. 4, 28. Juli 1969, Columbus, Ohio, US; abstract no. 16240e, T.V.LIPETS 'Catalytic activity of binary and ternary alloys of the palladium-nickel-copper system' Seite 268 ;
- Lipets, T., V., et al., Kinet. Katal. 1969, 10(1), pp. 206-208
- Binary Phase Diagrams, 2nd ed., vol. 1, ASM International, (1990), pp. 1220, 1222, 1223, 1454-56, 1749, 1751, 2338-2340, 2942, 2943, 3033, 3034, 3036-3039, 2839, 2840

## Beschreibung

Die Erfindung bezieht sich auf eine Verwendung eines aus einer Palladiumlegierung bestehenden Katalysators sowie auf eine Sicherheitseinrichtung zur Aufnahme des Katalysators.

Wasserstoff aus einem Wasserstoff und Sauerstoff enthaltenden und deshalb explosiven Gasgemisch zu beseitigen, ist insbesondere bei Kernreaktorunfällen von Bedeutung. Solche Gasgemische können vor allem bei Kernschmelzunfällen von Leichtwasserreaktoren auftreten.

Zur Beseitigung von Wasserstoff aus der Atmosphäre eines Sicherheitsbehälters eines Kernreaktors ist es bekannt, das Gasgemisch abzusaugen und außerhalb des Sicherheitsbehälters mit Kupferoxid CuO₂ bei einer Temperatur von 200°C umzusetzen, vgl. W. Baukal et al, "Möglichkeiten zur Wasserstoffbeseitigung", BMI-1984-033, 1984. Dieses Verfahren wird als "Einwegmethode" bezeichnet, weil das bei der Reaktion gebildete Kupfer ersetzt werden muß. Zusätzlich setzt man voraus, daß zum Absaugen des Wasserstoffs Energie zum Antrieb von Pumpem zur Verfügung steht.

Bekannt ist es auch aus L. Thompson, "Program plan for ERRI hydrogen combustion and control studies", ERRI, Palo Alto Nov. 81, und M. Berman et al, "Hydrogen behavior and light-water-reactors", Nuclear Safety, Vol. 25, No. 1, 1984, eine gezielte Zündung des Gasgemisches im Sicherheitsbehälter einzuleiten. Hierzu ist es bekannt, Platin als Katalysator einzusetzen, um die Zündung innerhalb eines Zeitraums von 20 sec bis 400 sec in Abhängigkeit insbesondere von der Wasserstoffkonzentration im Gasgemisch, von der Gasgeschwindigkeit und der Gastemperatur einzuleiten, vgl. L. R. Thorne et al, "Platinum catalytic igniters for lean hydrogen-air mixtures", NRC FIN No. A-1336 (DOE 40-550-75), 1986. Die aus solchen Maßnahmen resultierenden Folgereaktionen und die auftretende Beanspruchung des Sicherheitsbehälters sind jedoch noch nicht eindeutig geklärt. Insbesondere wird die sich durch Turbulenzen im Gasgemisch ggf. höher als erwartet einstellende Ausbreitungsgeschwindigkeit der Flammenfront und die damit gegebene Gefahr einer Detonation als kritisch angesehen.

In einer nicht vorveröffentlichten deutschen Patentanmeldung P 36 04 416.4-43 (PT 1.781 G) wird eine im Sicherheitsbehälter einsetzbare Vorrichtung zur Beseitigung von Wasserstoff beschrieben, bei der zur Aufnahme des Wasserstoffs Metalle eingesetzt werden, die eine hohe Aufnahmefähigkeit für Wasserstoff auch bei geringem Wasserstoffpartialdruck im Gasgemisch aufweisen. Zur Verhinderung von Oxidation sind die Metalle mit einer wasserstoffdurchlässigen Schutzschicht überzogen. Als Schutzschicht wird auch Palladium verwendet. Palladiumbeschichtetes Vanadium hat sich als Katalysator für eine effektive Umsetzung des Wasserstoffs zu Wasser erwiesen.

Zweistofflegierungen Pd-Cu und Pd-Ni werden als Katalysatoren in Chem. Abstracts, Vol. 71, No. 4, 1969, 16240e beschrieben. Aus der dort angegebenen Veröffentlichung sind auch ternäre Pd-Cu-Ni-Legierungen bekannt. Auf Katalysatoren aus Edelmetall- und Nichtedelmetalloxidgemischen zur Dehydrierung oder Hydrierung wird in FR-A-2139081 hingewiesen. In GB-A-1123585 werden Pd oder Pd-Rh als Katalysatoren auf Metalloxiden angegeben.

Aufgabe der Erfindung ist es, Katalysatoren für die Wasserstoffoxidation mit möglichst geringer Ansprechzeit bis zur katalytischen Reaktion zu finden. Es kommt darüber hinaus darauf an, daß die Katalysatoren gegen Katalysatorgifte, wie Chlor, Schwefel und Kohlenmonoxid im Gasgemisch unempfindlich reagieren. Der katalytische Umsatz soll auch bei Temperaturen um etwa 100°C möglichst hoch sein, um Knallgasreaktionen im Sicherheitsbehälter mit Sicherheit zu vermeiden.

Diese Aufgabe der Erfindung wird durch Verwendung eines in Patentanspruch 1 angegebenen Katalysators aus einer Palladiumlegierung gelöst. Die Palladiumlegierung enthält zumindest 80 Gew% Pd, 1 Gew% bis zu 19,9 Gew% Ni, und 0.1 Gew% bis zu 10 Gew% Cu. Mit Palladiumlegierungen dieser Art läßt sich Wasserstoff in Anwesenheit von Sauerstoff im Gasgemisch bei Temperaturen um 100°C an der Oberfläche der Legierungen oxidieren. Die Ansprechzeit bis zum Reaktionsbeginn beträgt je nach Vergiften der Gasatmosphäre mit Katalysatorgiften, wie Chlor, Schwefel oder Kohlenmonoxid nur wenige Minuten. Es hat sich herausgestellt, das PdNiCu-Legierungen das katalytische Verhalten von reinem Pd bei Gasatmosphären, wie sie bei Reaktorunfällen realistischer Weise zu erwarten sind, bei weitem übertreffen. Es sollten Mindestwerte für den Gehalt von Ni und Cu eingehalten werden, für Ni 1 Gew% für Cu 0,1 Gew%.

Bevorzugt sind Palladiumlegierungen mit mindestens 89 Gew% Pd, maximal 10 Gew% Ni und maximal 1 Gew% Cu geeignet, Patentanspruch 2. Insbesondere hat sich eine Legierung mit 95 Gew% Pd, 4 Gew% Ni und 1 Gew% Cu bewährt, Patentanspruch 3. Legierungen dieser Art katalysieren die Oxidation von Wasserstoff in Gasgemischen, die Chlor-, Schwefelverbindungen und Kohlenmonoxid enthalten, mit geringster Verzögerung. Die Reaktionen verlaufen zuverlässig.
Um die bei der katalytischen Oxidation des Wasserstoffs entstehende Wärme aufnehmen und ableiten können, wird nach Patentanspruch 4 ein Katalysator verwendet, bei dem die Palladiumlegierung auf ein die Reaktionswärme aufnehmendes Trägerblech ein- oder beidseitig aufgebracht ist. Als Material für das Trägerblech eignet sich bevorzugt Aluminium oder eine Aluminiumlegierung oder Kupfer oder eine Kupferlegierung, Patentanspruch 5. Eine Verwendung des Katalysators in einer gasdicht geschlossenen Katalysatorkammer ist in Patentanspruch 6 angegeben.

Fur die Verwendung der Palladiumlegierung in einer Sicherheitseinrichtung zur katalytischen Oxidation von Wasserstoff ist nach Patentanspruch 7 eine gasdicht geschlossene Katalysatorkammer vorgesehen, die ein Blech oder ein Netz aus der Palladiumlegierung oder ein mit der Palladiumlegierung beschichtetes metallisches Trägerblech enthält. Das Blech oder Netz oder Trägerblech ist in der Katalysatorkammer derart angeordnet, daß es nach Öffnen der Kammer im Gefahrenfalle - also dann, wenn in die die Katalysatorkammer umgebende, Sauerstoff enthaltende Gasatmosphäre Wasserstoff eindringt - mit der Gasatmosphäre in Kontakt kommt. Um bei Kontakt mit der Gasatmosphäre eine Zündung des Gasgemisches zu vermeiden, wird die insgesamt im Gefahrenfalle zur Verfügung stehende Katalysatoroberfläche so festgelegt, daß das Blech, Netz oder Trägerblech bei seiner Erwärmung während der Reaktion durch Aufnahme der Reaktionswärme nicht so hoch erhitzt wird, daß an der Katalysatoroberfläche die Zündtemperatur des Gasgemisches erreicht wird. Es wird eine Grenztemperatur für die Katalysatoroberfläche festgelegt, die unterhalb der Zündtemperatur liegt, und die dafür notwendige Mindestfläche für Blech, Netz oder Trägerblech bestimmt unter Berücksichtigung einerseits der zu erwartenden Wasserstoffmenge, die maximal in die Gasatmosphäre eindringen kann und die die maximal sich entwickelnde Reaktionswärme vorgibt, sowie andererseits unter Berücksichtigung der möglichen Wärmeabgabe von Blech, Netz oder Trägerblech an die Umgebung, wobei insbesondere der Wärmeübergang zwischen Katalysatoroberfläche und Gasatmosphäre entscheidend ist.

Das Blech oder Netz oder Trägerblech sind bevorzugt in der Katalysatorkammer derart untergebracht, daß sie sich nach Öffnen der Katalysatorkammer unter Ausbildung einer Kontaktfläche in die Umgebung ausstrecken, Patentanspruch 8 Dies geschieht zweckmäßig unter Wirkung der Schwerkraft, Patentanspruch 9, so daß im Gefahrenfalle für die Ausbildung der Kontaktfläche keine zusätzlichen Einrichtungen benötigt werden. Hierzu sind das Blech, Netz oder Trägerblech nach Patentanspruch 10 in der Katalysatorkammer jalousieartig gefaltet und so angeordnet, daß sie sich nach Öffnen des Sicherheitsbehälters unter Schwerkraftwirkung entfalten und rasch in die Umgebung ausstrecken.

Unabhängig von der Schwerkraft ist das Blech oder Netz oder Trägerblech auch ohne zusätzliche Einrichtungen selbsttätig dann in die Umgebung ausstreckbar, wenn sie innerhalb der Katalysatorkammer rolloartig gewickelt und vorgespannt angeordnet sind, so daß sie sich nach Öffnen der Katalysatorkammer unter Wirkung der Federkraft in die Umgebung ausrollen, Patentanspruch 11.

Die Erfindung und weitere Einzelheiten der Erfindung werden nachfolgend anhand von Ausführungsbeispielen näher erläutert. Es zeigen im einzelnen:
- Fig. 1: Druckverlauf in einer Reaktionskammer bei katalytischer Oxidation von Wasserstoff an einer Palladiumlegierung, Pd 95 Gew%, Ni 4 Gew%, Cu 1 Gew%, sowie der dabei auftretende Temperaturverlauf in einem beidseitig mit der Palladiumlegierung beschichteten Trägerblech aus Aluminium und der Temperaturverlauf in der Umgebung des Trägerblechs;
- Fig. 2: Druck- und Temperaturverlauf wie in Fig. 1 bei katalytischer Oxidation an einer Palladiumlegierung mit Pd 90 Gew%, Ni 9,5 Gew%, Cu 0,5 Gew%;
- Fig. 3: Übersichtstabelle
- Fig. 4: Katalysatorkammer mit gefaltetem Blech oder Trägerblech;
- Fig. 5: Katalysatorkammer mit rolloartig gespanntem Blech oder Trägerblech;
- Fig. 6: Mindestkatalysatoroberfläche in Abhängigkeit von der maximalen Temperatur im Blech oder Trägerblech.

### Ausführungsbeispiel 1

Es wird die katalytische Wirkung einer Palladiumlegierung, die 9⁵ Gew% Pd, 4 Gew% Ni, 1 Gew% Cu enthielt und auf einem Trägerblech aus Aluminium beidseitig aufgetragen war, in einer Reaktionskammer untersucht, in die ein realistischen Verhältnissen bei Reaktorunfällen anpaßbares Gasgemisch einleitbar war. In der Reaktionskammer wurden ein oder mehrere Trägerbleche mit freibleibender beschichteter Oberfläche jeweils so angeordnet, daß die beiden beschichteten Seiten für das in der Reaktionskammer enthaltene Gasgemisch zugänglich waren. Insgesamt befanden sich im Ausführungsbeispiel 1 in der Reaktionskammer, die ein Volumen von 6,5 lt aufwies, Trägerbleche mit einer Gesamtoberfläche von 240 cm² für die Katalyse.

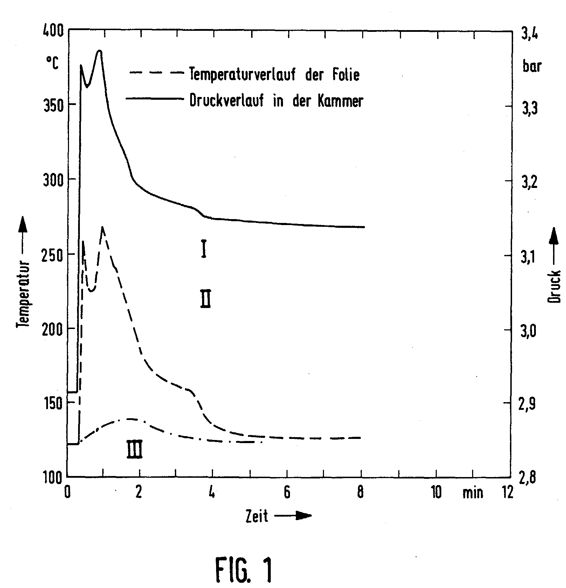

In Fig. 1 ist der Druckverlauf in der Reaktionskammer (mit I bezeichneter Linienzug) nach Einleiten von Wasserstoff in eine Gasatmosphäre dargestellt, die in Partialdrücken 1,3 bar Luft, 1,6 bar Dampf, 0,007 bar CO enthielt. In diese Gasatmosphäre wurden 0,4 bar H₂ eingeleitet.
Darüberhinaus ist in Fig. 1 der Temperaturverlauf im beschichteten Trägerblech (mit II bezeichneter gestrichelter Linienzug) sowie der Temperaturverlauf in der Umgebung des beschichteten Trägerblechs in der Reaktionskammer, also die Raumtemperatur der Reaktionskammer wiedergegeben (mit III bezeichneter strichpunktierter Linienzug).

Nach Einleiten des Wasserstoffs in die Gasatmosphäre herrschte in der Reaktionskammer zunächst ein Druck von über 3,3 bar. Infolge einsetzender katalytischer Oxidation des Wasserstoffs fiel der Druck dann innerhalb der ersten etwa 3,5 Minuten auf einen Druck von ca. 3,15 bar. Der Druck blieb dann konstant, woraus ersichtlich ist, daß die Oxidationsreaktion bereits nach dieser Zeit im wesentlichen abgeschlossen war und der Wasserstoff gebunden als Wasserdampf vorlag.

Im gleichen Zeitraum nimmt die Temperatur im Trägerblech, ausgehend von 120°C innerhalb 1 Minute bis zu einer maximalen Temperatur von 260°C zu. Die Temperatur klingt nach Erreichen dieser maximalen Temperatur rasch wieder ab. Nach 4 Minuten erreicht das Trägerblech wieder die Ausgangstemperatur von 120°C.

Daß die bei der Katalyse entstehende Wärme fast vollständig vom Trägerblech aufgenommen und abgeleitet werden konnte, zeigt die geringfügige Temperaturtönung in der Umgebung der beschichteten Trägerbleche in der Reaktionskammer: die Temperatur in der Reaktionskammer stieg von 120°C nach Einleiten des Wasserstoffs während der katalytischen Reaktion bis maximal auf 140°C. Diese maximale Temperatur in der Reaktionskammer wurde 2 Minuten nach Reaktionsbeginn erreicht. Anschließend klingt die Wärmetönung in der Reaktionskammer wieder auf ihren Anfangswert ab.

### Ausführungsbeispiel 2

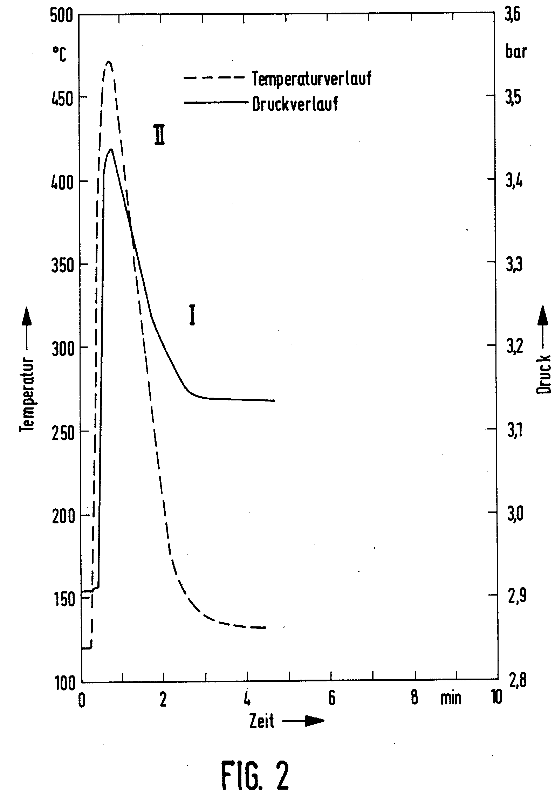

In Fig. 2 ist der Reaktionsverlauf einer katalytischen Oxidation von Wasserstoff für eine Palladiumlegierung wiedergegeben, die 90 Gew% Pd, 9,5 Gew% Ni, 0,5 Gew% Cu enthält. Die Palladiumlegierung ist beidseitig auf einem Trägerblech aus Aluminium aufgesputtert. Das Trägerblech ist 0,1 mm dick. Insgesamt stehen für die Katalyse 80 cm² Katalysatoroberfläche zur Verfügung.

In Fig. 2 ist der Druckverlauf in der Reaktionskammer sowie der Temperaturverlauf im Trägerblech in gleicher Weise wie in Fig. 1 dargestellt: mit I ist der Linienzug für den Druckverlauf in der Reaktionskammer, mit II der Temperaturverlauf im Trägerblech bezeichnet. In Fig. 2 wurde der Temperaturverlauf in der Umgebung des Trägerblechs nicht wiedergegeben, die Wärmetönung in der Reaktionskammer ist jedoch auch hier nur gering. Die bei der Katalyse entstehende Wärme wird vom Trägerblech aufgenommen und abgeführt.

Beim Ausführungsbeispiel nach Fig. 2 enthält die Reaktionskammer eine Gasatmosphäre mit folgenden Gasanteilen (angegeben in Partialdrücken): Luft 1,3 bar, Wasserdampf 1,6 bar, CO 0,005 bar. In die Gasatmosphäre wurde Wasserstoff mit 0,4 bar eingeleitet.

Wie im Ausführungsbeispiel nach Fig. 1 setzt auch bei der hier eingesetzten Palladiumlegierung die katalytische Reaktion unmittelbar nach Einleiten des Wasserstoffs in die Gasatmosphäre ein. Mit steigendem Druck in der Reaktionskammer bei Zugabe des Wasserstoffs nimmt auch die Temperatur im Trägerblech zu. Die katalytische Oxidation des Wasserstoffs führt zu einem Druckabfall, der Druck in der Reaktionskammer fällt von etwa 3,4 auf 3,1 bar ab. Die Temperatur im Trägerblech nimmt ausgehend von 120°C rasch zu und steigt innerhalb der 1. Minute bis auf maximal etwa 240°C an. Sie fällt anschließend wieder und erreicht schon nach 3 Minuten wieder ihren Ausgangswert von 120°C. Der Wasserstoff ist vollständig in Wasserdampf überführt.

Aufgrund dieser Untersuchungen wurde für geeignete Legierungen nur noch der Beginn der Oxidationsreaktion festgestellt, also die Zeit, bei der durch Aufnahme von Reaktionswärme ein Temperaturanstieg im Trägerblech einsetzte.

### Ausführungsbeispiel 3

Es wurde eine Palladiumlegierung mit 90 Gew% Pd, 9,5 Gew% Ni, 0,5 Gew% Cu als Blech (ausgewalzte Folie) eingesetzt. Ein gesondertes Trägerblech wurde nicht benutzt. Die Abmessungen des Blechs betrugen 200 x 20 x 0,1 mm³. In der Reaktionskammer von 6,5 lt Volumen standen insgesamt 80 cm² Katalysatoroberfläche zur Verfügung.

In der Reaktionskammer war ein Gasgemisch mit 1,3 bar Luft, 0,005 bar CO, 1,6 bar Wasserdampf enthalten. Die Gasatmosphäre war darüber hinaus mit Verunreinigungsspuren von Chlor, wasserlöslichen Aerosolen (Silber- und Bornitrate) und Öl verschmutzt worden, um einen für die katalytische Reaktion möglichst ungünstigen Zustand der Gasatmosphäre zu schaffen, wie er bei Reaktorunfällen im Reaktorsicherheitsbehälter auftreten könnte. Die Anfangstemperatur im Blech betrug 120°C.

In die Reaktionskammer wurden 0,4 bar H₂ eingeführt. Die katalytische Wirkung der Pd-Legierung setzte ohne merkliche Verzögerung ein, der Temperaturanstieg im Blech begann spontan. Die Temperatur im Pd-Blech stieg maximal auf 500°C an.

### Ausführungsbeispiel 4

Die im Ausführungsbeispiel 3 angegebene Pd-Legierung mit 90 Gew% Pd, 9,5 Gew% Ni und 0,5 Gew% Cu wurde auf ein Trägerblech aus Aluminium aufgebracht.

In der Reaktorkammer wurden Trägerbleche mit einer katalyisch wirksamen Gesamtoberfläche von 120 cm² eingesetzt. Es herrschte eine Gasatmosphäre, die 1,6 bar Luft, 0,005 bar Kohlenmonoxid enthielt. In diese Gasatmosphäre wurden 0,4 bar H₂ eingeleitet. Die Anfangstemperatur im Trägerblech betrug 120°C.

Der Druckabfall und der Temperaturanstieg setzten nach 1 Minute ein. Die Temperatur im Trägerblech stieg maximal auf 325°C.

### Ausführungsbeispiel 5

Eine Pd-Legierung mit 94 Gew% Pd, 5 Gew% Ni und 1 Gew% Cu wurde beidseitig auf einem Trägerblech aus Aluminium aufgedampft. Die Dicke der Pd-Legierung betrug auf beiden Seiten des Trägerbleches 3000 Å. Ein Trägerblech wies folgende Abmessungen auf: 200 x 30 x 0,1 mm³. Insgesamt standen bei diesem Ausführungsbeispiel in der Reaktionskammer 240 cm² Katalysatoroberfläche zur Verfügung. Es ist selbstverständlich, daß die katalytische Reaktion um so rascher einsetzt, je größer die innerhalb der Reaktionskammer eingesetzte Katalysatoroberfläche ist. Wesentlich für die Bestimmung der Katalysatoroberfläche ist jedoch deren maximal zulässige Erwärmung bis zur vorgegebenen Grenztemperatur unterhalb der Zündtemperatur des Gasgemisches. Da hierfür die Wärmeabgabe aus dem Blech oder Trägerblech an die Umgebung entscheidend ist, kommt es auch auf den gegebenen spezifischen Wärmeübergang (Wärmeübergangskoeffizient in J/m²Ks) an. Um eine hohe Sicherheit zu erreichen, ist es somit anzustreben, der Gasatmosphäre im Reaktorsicherheitsbehälter beim Störfall möglichst viel Katalysatoroberfläche und dies möglichst rasch anzubieten.

Im Ausführungsbeispiel wies die in der Reaktionskammer vorhandene Gasatmosphäre folgende Zusammensetzung in Partialdrücken auf: Luft 1,3 bar, Dampf 1,6 bar, CO 0,007 bar. Die Anfangstemperatur im Trägerblech betrug 120°C. In die Reaktionskammer wurden 0,4 bar H₂ eingeleitet.

Die katalytische Reaktion setzte ohne merkliche Verzögerung ein, die maximale Temperatur im Trägerblech betrug 280°C.

### Ausführungsbeispiel 6

Es wurde eine Pd-Legierung, die 94 Gew% Pd, 5 Gew% Ni, 1 Gew% Cu enthielt, beidseitig auf ein Trägerblech aus Aluminium mit einer Abmessung von 145 x 28 x 0,1 mm³ aufgebracht. In der Reaktionskammer waren Trägerbleche mit einer Katalysatoroberfläche von insgesamt 180 cm² eingesetzt. Die in der Reaktionskammer vorhandene Gasatmosphäre wies folgende Gasanteile in Partialdrücken auf: Luft 1,3 bar, Wasserdampf 1,6 bar, CO 0,006 bar. Die Anfangstemperatur im Trägerblech betrug 120°C. Es wurden 0,4 bar H₂ eingeleitet.

Die Reaktion begann spontan, die maximale Temperatur im Trägerblech betrug 305°C.

### Auführungsbeispiel 7

Es wurde die Pd-Legierung mit 95 Gew% Pd, 4 Gew% Ni, 1 Gew% Cu beidseitig auf ein Trägerblech aus Kupfer aufgedampft. In der Reaktionskammer standen 240 cm² Katalysatoroberfläche zur Verfügung. In die in der Kammer vorhandene Luftatmosphäre von 1,9 bar wurden 0,08 bar Wasserstoff (4 Vol%) eingeführt. Die Anfangstemperatur im Trägerblech betrug ca. 100°C.

Trotz geringer Wasserstoffkonzentration setzte auch hier die Reaktion unmittelbar nach Einleiten des Wasserstoffs ein, die maximale Temperatur im Trägerblech betrug 130°C.

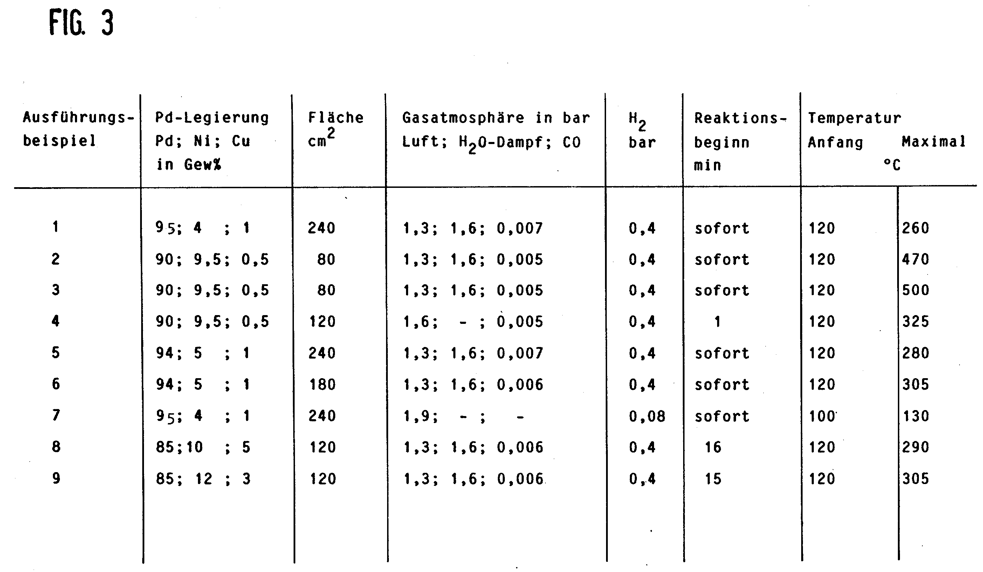

Die wesentlichen Daten der vorgenannten Ausführungsbeispiele 1 bis 7 sind in Fig. 3 tabellarisch zusammengefaßt.

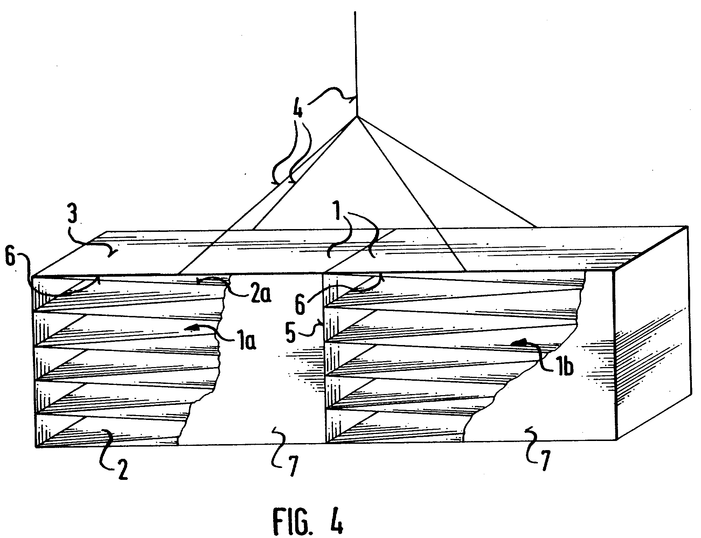

In Fig. 4 ist eine gasdicht verschlossene Katalysatorkammer 1 mit jalousieartig gefaltetem Trägerblech 2, das mit einer Pd-Legierung beschichtet ist, schematisch wiedergegeben. Die Katalysatorkammer ist an ihrer Deckwand 3 an einer Halterung 4 hängend angebracht. An der Deckwand 3 sind in zwei durch eine Zwischenwand 5 getrennten Kammerräumen 1a, 1b jeweils die obersten Blechteile 2a der Trägerbleche an einer Kante 6 befestigt. Die Halterung 4 läßt sich beispielsweise an der Decke des Reaktorsicherheitsbehälters so verankern, daß unterhalb der Katalysatorkammer 1 ein freier Raum zum Ausstrecken des Trägerbleches 2 nach Öffnen der Katalysatorkammer verbleibt.

Die Katalysatorkammer 1 besteht aus Aluminiumwänden 7, die an der Deckenwand 3 und miteinander weichverlötet sind. Das Weichlot ist so gewählt, daß die Katalysatorkammer sich bei Auftreten einer vorgegebenen Temperatur im Gefahrenfalle unter Aufweichen der Verbindungsnähte an den Aluminiumwänden 7 und Auseinanderfallen der Wände öffnet und das Trägerblech 2 freigibt. Das Trägerblech erstreckt sich dann unter seinem Eigengewicht in den Raum unterhalb der Katalysatorkammer 1. Die Katalysatoroberfläche wird mit der Gasatmosphäre in Kontakt gebracht.

Im Ausführungsbeispiel ist das Trägerblech 2 lediglich gefaltet in der Katalysatorkammer eingesetzt. Soll eine möglichst plane, sich rasch entfaltende Fläche erzeugt werden, ist es zweckmäßig, die einzelnen Trägerbleche an ihren Kanten durch Scharniere miteinander zu verbinden, so daß die aneinandergefügten Trägerbleche gegeneinander leicht beweglich sind. Mit Scharnieren verbundene Trägerbleche sind in Fig. 4 nicht dargestellt.

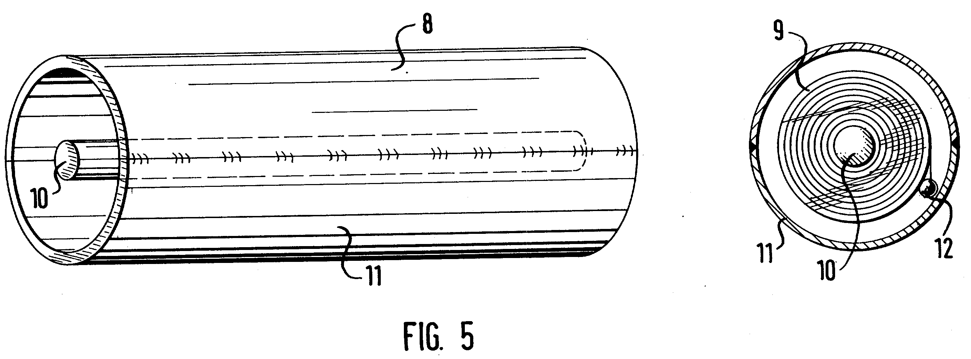

In Fig. 5 ist eine tonnenförmige Katalysatorkammer 8 dargestellt, in der ein mit einer Pd-Legierung beschichtetes Trägerblech 9 rolloartig auf einer spiralfederartig vorgespannten Welle 10 aufgerollt ist. Nach Öffnen einer Bodenklappe 11, die in gleicher Weise wie beim Ausführungsbeispiel nach Fig. 4 in der tonnenförmigen Katalysatorkammer 8 weichverlötet ist, entrollt sich das Trägerblech 9 unter Wirkung der Federkraft in die Umgebung und gibt die Katalysatoroberfläche zum Kontakt mit der im Reaktorsicherheitsbehälter entstandenen Gasatmosphäre frei. Die katalytische Oxidation des Wasserstoffs setzt dann innerhalb weniger Minuten ein.

Beide Katalysatorkammern 1 und 8 sind im geschlossenen Zustand mit Inertgas, beispielsweise Argon gefüllt. Das Inertgas steht unter Überdruck, um das Eindringen von Fremdgas aus dem Außenraum zu verhindern. Um die katalytische Qualität der Pd-Legierung über längere Zeit mit Sicherheit aufrechtzuerhalten, weist die Inertgasatmosphäre 1 bis 2 Vol% Wasserstoff auf.

In den in Fig. 4 und 5 dargestellten Katalysatorkammern sind statt mit Pd-Legierungen beschichtete Trägerbleche auch Bleche oder Netze aus Pd-Legierungen, gegebenenfalls zu Folien ausgewalzt einsetzbar. Werden Folien benutzt, ist für deren Erstreckung in die Umgebung beispielsweise durch Anbringen einer die Folie beschwerenden Leiste an der äußeren Kante der Folie, die sich beim Öffnen der Katalysatorkammer zuerst absenkt, Sorge zu tragen. In Fig. 5 ist eine solche Leiste 12 dargestellt.

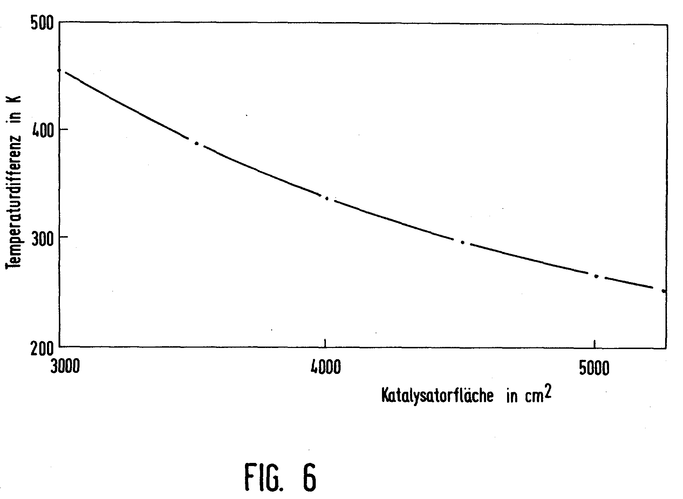

In Fig. 6 ist für einen Reaktorsicherheitsbehälter mit einem Gesamtvolumen von 80 000 m³ die notwendige Katalysatoroberfläche angegeben unter folgenden Annahmen:
1.) in den Reaktorsicherheitsbehälter strömen im Falle eines Reaktorunfalls innerhalb einer Zeit von 1000 s (16,6 min) 800 kg Wasserstoff ein;
2.) die Katalysatoroberfläche darf bei 3 bar Druck im Reaktorsicherheitsbehälter die Zündtemperatur des Wasserstoff und Sauerstoff enthaltenden Gasgemisches von 600°C nicht erreichen.

Unter Berücksichtigung der bei vollständigem Umsatz des Wasserstoffs auftretenden Reaktionswärme und unter Berücksichtigung von an beschichteten Trägerblechen experimentell ermittelten Wärmeübergangskoeffizienten wurde die Wärmeentwicklung im Trägerblech während der katalytischen Oxidation berechnet. Dabei wurde davon ausgegangen, daß die Reaktionswärme der exothermen Reaktion vollständig vom Trägerblech aufgenommen wurde. Diese Wärme ist dann wieder in die Atmosphäre des Reaktorsicherheitsbehälters zu überführen. Insoweit wurde - in gleicher Weise wie schon bei Annahme der in den Reaktorsicherheitsbehälter einströmenden Wasserstoffmenge - von ungünstigsten Voraussetzungen beim Reaktorunfall ausgegangen.

Zu Fig. 6 ist über der Mindestfläche für die Katalysatoroberfläche in m² die Temperaturerhöhung in K aufgetragen, die maximal im Trägerblech bei dem oben angenommenen Wasserstoffeinbruch auftritt. Die Temperaturentwicklung im Trägerblech wird bestimmt durch das thermische Gleichgewicht zwischen Wärmeentwicklung infolge Oxidationsreaktion und Wärmeabgabe vom Trägerblech an die Umgebung. Die maximale Temperatur in der Katalysatoroberfläche nimmt mit wachsender Oberfläche ab. Bei einer Flächengröße von 5000 m² bleibt die maximale Temperaturerhöhung unter 300 K, d. h. bei einer Anfangstemperatur von 120°C steigt die Temperatur im Trägerblech bis auf etwa 400°C. Diese Temperatur liegt weit unterhalb der Zündtemperatur und gibt auch unter realistischen Bedingungen einen ausreichenden Sicherheitsabstand zur Zünd - temperatur.

## Patentansprüche

1. Verwendung eines aus einer Palladiumlegierung bestehenden Katalysators mit der Zusammensetzung: zumindest 80 Gew% Pd, 1 Gew% bis zu 19,9 Gew% Ni, und 0.1 Gew% bis zu 10 Gew% Cu, für die katalytische Oxidation von Wasserstoff in Wasserstoff und Sauerstoff enthaltender Atmosphäre.

2. Verwendung nach Anspruch 1 mit einem Katalysator der Zusammensetzung mindestens 89 Gew% Pd, maximal 10 Gew% Ni und maximal 1 Gew% Cu.

3. Verwendung nach Anspruch 2 mit einem Katalysator der Zusammensetzung 95 Gew% Pd, 4 Gew% Ni und 1 Gew% Cu.

4. Verwendung eines Katalysators nach Anspruch 1, 2 oder 3,
**dadurch gekennzeichnet,**
daß die Palladiumlegierung auf ein die Reaktionswärme aufnehmendes Trägerblech ein- oder beidseitig aufgebracht ist.

5. Verwendung nach Anspruch 4,
**dadurch gekennzeichnet,**
daß das Trägerblech aus Aluminium oder einer Aluminiumlegierung oder Kupfer oder einer Kupferlegierung besteht.

6. Verwendung eines Katalysators nach einem der vorhergehenden Ansprüche 1 bis 5 in einer Sicherheitseinrichtung zur katalytischen Oxidation von Wasserstoff in einer Wasserstoff und Sauerstoff enthaltenden Atmosphäre,
**gekennzeichnet durch**
ein in einer gasdicht geschlossenen Katalysatorkammer (1, 7) eingesetztes Blech oder Netz, das aus der Palladiumlegierung besteht, oder ein metallisches Trägerblech (2, 8), auf dessen Oberfläche die Palladiumlegierung aufgebracht ist, wobei die Katalysatorkammer (1, 7) derart ausgebildet ist, daß sie sich bei Anwesenheit von Wasserstoff in der die Kammer umgebenden Sauerstoff enthaltenden Gasatmosphäre öffnet und damit die Palladiumlegierung mit der Atmosphäre in Kontakt bringt.

7. Sicherheitseinrichtung zur katalytischen Oxidation von Wasserstoff in einer Wasserstoff und Sauerstoff enthaltenden Atmosphäre mit einer Palladiumlegierung nach einem der Ansprüche 1 bis 6,
**dadurch gekennzeichnet,**
daß in einer gasdicht geschlossenen Katalysatorkammer (1, 7) ein Blech oder ein Netz, das aus der Palladiumlegierung besteht, oder ein metallisches Trägerblech (2, 8), auf dessen Oberfläche die Palladiumlegierung aufgebracht ist, eingesetzt ist, und daß die Katalysatorkammer (1, 7) sich bei Anwesenheit von Wasserstoff in der die Kammer umgebenden Sauerstoff enthaltenden Gasatmosphäre öffnet und damit die Palladiumlegierung mit der Atmosphäre in Kontakt bringt.

8. Sicherheitseinrichtung nach Anspruch 7,
**dadurch gekennzeichnet,**
daß Blech oder Netz oder Trägerblech (2, 8) in der Katalysatorkammer (1, 7) derart untergebracht sind, daß sie sich nach Öffnen der Katalysatorkammer (1, 7) unter Ausbildung einer Kontaktfläche für die Gasatmosphäre in die Umgebung ausstrecken.

9. Sicherheitseinrichtung nach Anspruch 8,
**dadurch gekennzeichnet,**
daß sich Blech oder Netz oder Trägerblech (2, 8) nach Öffnen der Katalysatorkammer (1, 7) unter Wirkung der Schwerkraft in die Umgebung ausstrecken.

10. Sicherheitseinrichtung nach Anspruch 9,
**dadurch gekennzeichnet,**
daß Blech oder Netz oder Trägerblech (2) in der Katalysatorkammer (1) jalousieartig gefaltet sind und sich nach Öffnen der Katalysatorkammer in die Umgebung entfalten.

11. Sicherheitseinrichtung nach Anspruch 8,
**dadurch gekennzeichnet,**
daß Blech oder Netz oder Trägerblech (8) innerhalb der Katalysatorkammer (2) rolloartig gewickelt und mittels Spiral- oder Torsionsfedern vorgespannt sind, und daß sie sich nach Öffnen der Katalysatorkammer (7) unter Wirkung der Federkraft in die Umgebung ausrollen.

12. Sicherheitseinrichtung nach einem der vorhergebenden Ansprüche 7 bis 11,
**dadurch gekennzeichnet,**
daß die Katalysatorkammer (1, 7) mit Inertgas gefüllt ist, das unter Überdruck steht und 1 bis 2 Vol% Wasserstoff enthält.

## Claims

1. Use of a catalyst of palladium alloy of the following composition: at least 80 %-by-weight Pd, between 1 and 19.9 %-by weight Ni and between 0.1 and 10 %-by-weight Cu for catalytic oxidation of hydrogen in hydrogen and oxygen containing atmosphere.

2. Use according to Claim 1 with a catalyst of the following composition: at least 89 %-by-weight Pd, maximum 10 %-by-weight Ni and maximum 1 %-by-weight Cu.

3. Use according to Claim 2 with a catalyst of the following composition: 95 %-by-weight Pd, 4 %-by-weight Ni and 1 %-by-weight Cu.

4. Use of a catalyst according to Claim 1, 2 or 3, **characterised in that** the palladium alloy is applied to one or both sides of a support plate which accommodates heat of reaction.

5. Use according to Claim 4, **characterised in that** the support plate is made of aluminium or an aluminium alloy or copper or a copper alloy.

6. Use of a catalyst according to one of the above Claims 1 to 5 in a safety device for catalytic oxidation of hydrogen an a hydrogen and oxygen containing atmosphere, **characterised by** a plate or net which has been inserted into a gastight sealed catalyst chamber (1, 7) and which is composed of the palladium alloy, or a metallic support plate (2, 8) with the palladium alloy applied to its surface, and the catalyst chamber (1, 7) is designed in such a manner that it opens in the presence of hydrogen in the oxygen containing gas atmosphere which surrounds the chamber, thus establishing contact between the palladium alloy and the atmosphere.

7. Safety device for catalytic oxidation of hydrogen in a hydrogen and oxygen containing atmosphere with a palladium alloy according to one of Claims 1 to 6, **characterised in that** into a gastight sealed catalyst chamber (1, 7) is inserted a plate or a net made of the palladium alloy, or a metallic support plate (2, 8) with the palladium alloy applied to its surface, and that the catalyst chamber (1, 7) opens in the presence of hydrogen in the oxygen containing gas atmosphere which surrounds the chamber, thus establishing contact between the palladium alloy and the atmosphere.

8. Safety device according to Claim 7, **characterised in that** the plate or net or support plate (2, 8) is accommodated in the catalyst chamber (1, 7) in such a manner that they extend, after opening of the catalyst chamber (1, 7), into the environment whilst establishing a contact surface for the gas atmosphere.

9. Safety device according to Claim 8, **characterised in that,** after opening of the catalyst chamber (1, 7), plate or net or support plate (2, 8) extend under force of gravity into the environment.

10. Safety device according to Claim 9, **characterised in that** plate or net or support plate (2) are louvre-like folded in catalyst chamber (1) and unfold into the environment after opening of the catalyst chamber.

11. Safety device according to Claim 8, **characterised in that** plate or net or support plate (8) are wound like rollers and pretensioned by means of spiral or torsion springs, and after opening of catalyst chamber (7), they roll out into the environment under the springload.

12. Safety device according to one of the above Claims 7 to 11, **characterised in that** the catalyst chamber (1, 7) is filled with inert gas which is under positive pressure and contains between 1 and 2 %-by-vol. hydrogen.

## Revendications

1. Utilisation d'un catalyseur formé d'un alliage de palladium, ayant la composition suivante : au moins 80 % en poids de Pd, de 1 % en poids à 19,9 % en poids de Ni et de 0,1 % en poids à 10 % en poids de Cu, pour l'oxydation catalytique de l'hydrogène dans une atmosphère contenant de l'hydrogène et de l'oxygène.

2. Utilisation selon la revendication 1 avec un catalyseur ayant la composition suivante : au moins 89 % en poids de Pd, au plus 10 % en poids de Ni et au plus 1 % en poids de Cu.

3. Utilisation selon la revendication 2 avec un catalyseur ayant la composition suivante : 95 % en poids de Pd, 4 % en poids de Ni et 1 % en poids de Cu.

4. Utilisation d'un catalyseur selon la revendication 1, 2 ou 3, caractérisée en ce que l'alliage de palladium est appliqué sur une face ou sur les deux faces d'une tôle de support absorbant la chaleur de réaction.

5. Utilisation selon la revendication 4, caractérisée en ce que la tôle de support est formée d'aluminium ou d'un alliage d'aluminium ou de cuivre ou d'un alliage de cuivre.

6. Utilisation d'un catalyseur selon l'une des revendications 1 à 5 précédentes dans un dispositif de sécurité pour l'oxydation catalytique de l'hydrogène dans une atmosphère contenant de l'hydrogène et de l'oxygène, caractérisée par une tôle ou un filet utilisé dans une chambre de catalyseur (1, 7) fermée de façon étanche aux gaz, qui est formé de l'alliage de palladium, ou une tôle métallique de support (2, 8) dont la surface est revêtue de l'alliage de palladium, la chambre de catalyseur (1, 7) étant conçue de telle façon qu'elle s'ouvre en présence d'hydrogène dans l'atmosphère gazeuse contenant de l'oxygène et entourant la chambre et amène ainsi l'alliage de palladium au contact de l'atmosphère.

7. Dispositif de sécurité pour l'oxydation catalytique de l'hydrogène dans une atmosphère contenant de l'hydrogène et de l'oxygène avec un alliage de palladium selon l'une des revendications 1 à 6, caractérisé en ce qu'on utilise, dans une chambre de catalyseur (1, 7) fermée de façon étanche aux gaz, une tôle ou un filet qui est formé de l'alliage de palladium, ou une tôle de support (2, 8) dont la surface est revêtue de l'alliage de palladium, et en ce que la chambre de catalyseur (1, 7) s'ouvre en présence d'hydrogène dans l'atmosphère gazeuse contenant de l'oxygène et entourant la chambre et amène ainsi l'alliage de palladium au contact de l'atmosphère.

8. Dispositif de sécurité selon la revendication 7, caractérisé en ce que la tôle ou le filet ou la tôle de support (2, 8) est disposé dans la chambre de catalyseur (1, 7) de telle façon qu'après l'ouverture de la chambre de catalyseur (1, 7), il s'étire en formant une surface de contact pour l'atmosphère gazeuse dans l'environnement.

9. Dispositif de sécurité selon la revendication 8, caractérisé en ce que la tôle ou le filet ou la tôle de support (2, 8) s'étire dans l'environnement sous l'effet de la force de gravité après l'ouverture de la chambre de catalyseur (1, 7).

10. Dispositif de sécurité selon la revendication 8, caractérisé en ce que la tôle ou le filet ou la tôle de support (2) est plié(e) à la manière d'un store et se déplie dans l'environnement après l'ouverture de la chambre de catalyseur.

11. Dispositif de sécurité selon la revendication 8, caractérisé en ce que la tôle ou le filet ou la tôle de support (8) est enroulé(e) à la manière d'un store et précontraint(e) au moyen de ressorts spiraux ou de ressorts à torsion, et en ce qu'il (elle) se déroule dans l'environnement sous l'effet de l'élasticité après l'ouverture de la chambre de catalyseur (7).

12. Dispositif de sécurité selon l'une des revendications 7 à 11 précédentes, caractérisé en ce que la chambre de catalyseur (1, 7) est remplie d'un gaz inerte qui est en surpression et contient de 1 à 2 % en volume d'hydrogène.
